# NEW EUROPEAN PATENT SPECIFICATION

(11) **EP 1 554 337 B2**
(45) Date of publication and mention of the opposition decision: **30.11.2011**
(45) Mention of the grant of the patent: 29.11.2006
(21) Application number: 03769120.1
(22) Date of filing: 21.10.2003
(51) Int. Cl.: C08K 3/34, C08L 23/04

(54) **SCRATCH AND MAR RESISTANT SOFT ETHYLENE ELASTOMER COMPOSITIONS**
KRATZ- UND BESCHÄDIGUNGSFESTE WEICHE ETHYLENELASTOMERMISCHUNG
COMPOSITIONS D'ELASTOMERE ETHYLENE MOU RESISTANT A LA RAYURE ET A L'ABRASION

(30) Priority: 22.10.2002 CA 2409580; 21.03.2003 CA 2423078
(43) Date of publication of application: 20.07.2005
(73) Proprietor: E.I. DU PONT DE NEMOURS AND COMPANY, Wilmington, DE 19898 (US)
(72) Inventor: DHARIA, Amitkumar N., Coppell, TX 75019 (US); FARKAS, Nicholas A., Glenburnie, Ontario K0H 1S0 (CA); TUDOR, Colin, Kingston, Ontario K7M 3S3 (CA)
(74) Representative: Morf, Jan Stefan
(86) International application number: PCT/CA2003/001599
(87) International publication number: WO 2004/037916

(56) References cited:
- EP-A2- 1 153 975
- WO-A-98/32795
- WO-A1-93/03095
- JP-A- 1 135 750
- US-A- 5 585 420
- US-A- 5 731 376
- US-A- 6 153 680
- US-B1- 6 287 681
- US-B1- 6 417 271

## Description

### Field of the Invention

The invention relates to the field of soft ethylene elastomer compositions and in particular to soft ethylene elastomer compositions exhibiting improved scratch and mar resistant properties.

### Background to the Invention

The manufacture of exterior automotive parts has traditionally involved hard ethylene elastomer compounds, which provide good impact and scratch and mar resistance properties to the automobile exterior. These ethylene elastomers comprise a majority of polypropylene, a lesser amount of a rubber toughener (EPDM or EPR rubber) and a filler such as talc.

More recently compounds have been developed with added softness. These compounds called "soft ethylene elastomer compounds" have a polyethylene plastomer as the major component of the composition and polypropylene as a minor component. The addition of a small amount of organic peroxide, optionally with a co-agent, changes the melt rheology characteristics of the compound thereby improving thermal resistance and processing characteristics of the compound and providing a soft characteristic to the compound.

An example of a soft ethylene elastomer compound is disclosed in U.S. Patent No. 6,506,842 and International Patent Application No. WO 98/32795 to Heck et al. published July 30, 1998, U.S. Patent No. 6,506,842 and WO 98/32795 disclose a rheology-modified, substantially gel-free ethylene elastomer composition comprising an ethylene alpha-olefin (EAO) polymer or EAO polymer blend and at least one high melting polymer selected from polypropylene homopolymers and propylene/ethylene (P/E) copolymers. The composition has at least three of the following four characteristics: a shear thinning index (STI) of at least 20, a melt strength (MS) of at least 1.5 times that of the composition without rheology modification, a solidification temperature (ST) of at least 10°C greater than that of the composition without rheology modification, and an upper service temperature (UST) limit of at least 10°C greater than that of the composition without rheology modification.

The EAO polymer or EAO polymer blend of the ethylene elastomer is present in an amount of 50-90 % by weight of this component, preferably 65-85 % by weight while the high melting point polymer is preferably present in an amount of 50-10% by weight, more preferably 35-15% by weight.

U.S. Patent No. 6,506,842 and WO 98/32795 also disclose a process for preparing a rheology-modified, substantially gel-free thermoplastic elastomer composition, which includes treatment with an organic peroxide, and manufacture of articles using these compositions.

For automotive interior and other applications that require scratch and mar resistance, soft ethylene elastomer compositions have been deficient due to their soft polymeric nature.

As a result there still remains a need to provide a soft ethylene elastomer composition producing compounds with improved scratch and mar resistance properties.

### Summary of the Invention

According to one aspect of the invention there is provided a composition comprising a soft ethylene elastomer component and an effective amount of filler to impart improved scratch and mar resistance properties to the composition while not significantly decreasing the softness of the composition.

According to one aspect of the invention there is provided a composition comprising a soft ethylene elastomer component and an effective amount of filler and compatibilizer to impart improved scratch and mar resistance properties to the composition while not significantly decreasing the softness of the composition.

According to another aspect of the invention there is provided a composition comprising a soft ethylene elastomer component and an effective amount of filler and silicone to impart improved scratch and mar resistance properties to the composition while not significantly decreasing the softness of the composition.

According to another aspect of the invention there is provided a composition comprising a soft ethylene elastomer component and an effective amount of filler, silicone, and compatibalizer to impart improved scratch and mar resistance properties to the composition while not significantly decreasing the softness of the composition.

According to a further aspect of the invention there is provided a composition comprising a soft ethylene elastomer component and an effective amount of mica and compatibalizer to impart improved scratch and mar resistance properties to the composition while not significantly decreasing the softness of the composition.

According to a further aspect of the invention there is provided a composition comprising a soft ethylene elastomer component and an effective amount of mica and silicone to impart improved scratch and mar resistance properties to the composition while not significantly decreasing the softness of the composition.

According to yet a further aspect of the invention there is provided a composition comprising a soft ethylene elastomer component and an effective amount of mica, compatibalizer and silicone to impart improved scratch and mar resistance properties to the composition while not significantly decreasing the softness of the composition.

Preferred embodiments of the present invention also include a process for preparing the composition and an article of manufacture which has at least one component fabricated from the composition.

The compositions of the present invention have many advantageous properties. In particular they are scratch and mar resistant, while not significantly decreasing the softness of the composition. The composition also results in the production of articles with low gloss.

### Detailed Description of the Invention

The soft ethylene elastomer component used in the present invention is a rheology-modified ethylene elastomer composition comprising from 50 to 95% by weight of elastomeric ethylene polymers or EAO polymer blend and from 5 to 50% by weight of a high melting polymer, based on the total ethylene elastomer composition.

Elastomeric ethylene polymers that are suitable for use in the ethylene elastomer composition include interpolymers and diene modified interpolymers. Illustrative polymers include ethylene/propylene (EP) copolymers, ethylene/butylene (EB) copolymers, ethylene/octene (EO) copolymers, ethylene/alpha-olefin/diene modified (EAODM) interpolymers and ethylene/propylene/diene modified (EPDM) interpolymers. More specific examples include ultra low linear density polyethylene (CTLDPE) such as Attane^{™} manufactured by The Dow Chemical Company, homogeneously branched linear EAO copolymers such as Tafmer^{™} manufactured by Mitsui Petrochemicals Company Limited and Exact^{™} manufactured by Exxon Chemical Company, and homogeneously branched substantially linear EAO polymers such as the Affinity^{™} polymers available from The Dow Chemical Company and Engage® polymers available from DuPont Dow Elastomers L.L.C.

Preferred EAO polymer blends include homogeneously branched linear and substantially linear ethylene copolymers with a density measured in accordance with ASTM D-792 of 0.85-0.92 g/cc, especially 0.85- 0.90 g/cc and a melt index or I₂ (measured in accordance with ASTM D-1238 (190°C/2.16 kg weight) of 0.01-30 preferably 0.05-10 g/10 min. These substantially linear ethylene copolymers or interpolymers (also known as "SLEPs") are especially preferred.

In addition, the various functionalized ethylene copolymers such as ethylene vinyl acetate (EVA), which contain from 0.5-50 wt % units derived from vinyl acetate, are also suitable. When using an EVA polymer, those that have an I₂ of from 0.01-500, preferably 0.05-50 g/10 min are preferred.

Preferred SLEPs include Engage@ polyolefin elastomers and other polymers produced by The Dow Chemical Company and DuPont Dow Elastomers L.L.C.

The high melting polymer useful in the soft ethylene elastomer component is preferably a homopolymer of propylene, a copolymer of propylene with an α-olefin such as ethylene, 1-butene, 1-hexene or 4-methyl-1-pentene. The polymer may also be a blend of a homopolymer and a copolymer, a nucleated homopolymer or a nucleated copolymer. It may further be a nucleated blend of a homopolymer and a copolymer. The α-olefin is preferably ethylene. The copolymer may be a random copolymer or a block copolymer or a blend of a random copolymer and a block copolymer. The high melting polymer is preferably selected from polypropylene homopolymers and polyethylene copolymers with a melt flow rate (MFR) of (230°C and 2. 16 kg weight) of 0.3-60 g/10 min, preferably 0.8-40 g/10 min and more preferably 1-35 g/10 min.

A more detailed description of the preferred elastomeric ethylene polymer or EAO polymer blend and high melting polymer is provided in U.S. Patent No. 6,506,842 and WO 98/32795.

The soft ethylene elastomer component is preferably a rheology-modified, composition with low gel levels that enable the composition to maintain true thermoplastic behaviour.

The soft ethylene elastomer component is preferably treated with a suitable organic peroxide in the manner described in U.S. Patent No. 6,506,842 and WO 98/32795. Such suitable organic peroxides used for the purposes of this invention have a half-life of at least one hour at 120°C. Illustrative peroxides include: a series of vulcanizing and polymerization agents that contain α, α'-bis(t-butylperoxy)-diisopropylbenzene and are available from Geo Specialty Chemicals under the trade-mark Vulcup^{™}, a series of agents that contain dicumyl peroxide are available from Geo Specialty Chemicals under the trade-mark Di-cup^{™}, Luperox^{™} peroxides made by Atofina, North America, or Trigonox^{™} organic peroxides made by Moury Chemical Company.

Other suitable peroxides include dicymyl peroxide, 2,5-dimethyl-2,5-di-(t-butyl peroxy)hexane, di-t- butylperoxide, 2,5-di(t-amyl peroxy)-2,5-dimethylhexane, 2,5-di-(t-butylperoxy)- 2,5-diphenylhexane, bis(alpha-methylbenzyl)peroxide, benzoyl peroxide, t-butyl perbenzoate and bis(t-butylperoxy)-diisopropylbenzene.

The peroxide may also be used with a suitable co-agent such as Type I polar coagents, which are have a relatively low molecular weight. An example of this type of co-agent is trimethylopropane trimethacrylate (TMPTMA) sold by Sartomer under the name SR-350. Type II low polarity co-agent may also be useful such as 1,2-polybutadiene sold by Sartomer under the trade-mark Ricon®. The addition of co-agent may improve the properties of the rheology-modified ethylene elastomer compound, or reduce the amount of peroxide needed to effect the same level of rheology modification.

The preferred ratio of peroxide to co-agent used in this invention is in the range of about 1:1 to about 1:4 peroxide:co-agent, but may vary depending on the particular application.

A more detailed description of the preferred properties of the rheology-modified ethylene elastomer composition is provided in U.S. Patent No. 6,506,842 and WO 98/32795. Most preferably the composition of the present invention has a soft ethylene elastomer component with an STI of between 20 and 110 (calculated using a Kayeness capillary melt rheometer in which the shear rate is the ratio of melt viscosity at 1 sec⁻¹ to that at 1006 sec⁻¹), a MS of ≥ 1.5, a ST of between 75 and 145 °C (calculated using differential scanning calorimetry to measure the crystallization temperature of the first peak on cool-down) and a UST of between 50 and 160 °C (calculated using thermal mechanical analysis to determine the temperature at which the penetration probe penetrates 600 microns into the sample with the temperature being ramped from room temperature at 3°C per minute).

The soft ethylene elastomer component is combined with an effective amount of filler to improve the scratch and mar resistant properties of the soft ethylene elastomer component. The filler may be a platy filler, selected from mica, talc and clay. Alternatively, the soft ethylene elastomer component may be combined with the hard, spherical, or elongated filler activated alumina.

Most preferably, the soft ethylene elastomer component is combined with an effective amount of the filler mica. The mica is preferably a wet-ground mica of 0.044 mm (325 mesh). Preferably a muscovite mica is used or alternatively a phlogophite mica.

The filler is present in an amount of from 1 to 20 % by weight of the total composition, preferably between from 2 to 15% by weight, more preferably from 3 to 12% by weight, and further more preferably from 4 to 10% by weight.

The filler may also be combined with a compatibalizer to obtain improved scratch and mar resistant properties.

The addition of the filler and compatibalizer into the composition of the present invention may be by direct addition to the soft ethylene elastomer component during compound manufacture or preferably by addition through a pre-made masterbatch. If a masterbatch is used, it is preferably comprised of filler, compatibalizer and base resin in which the compatibalizer comprises from 1 to 20% of the total masterbatch composition, while the filler comprises from 10 to 90% of the total masterbatch composition. Preferably, the masterbatch comprises from 5 to 15% compatibalizer and from 30 to 60% filler.

The compatiblizer is preferably a functionalised polyolefin comprising maleic anhydride grafted Engage® or equivalent metallocene polyethylene plastomer, maleic anhydride grafted ethylene propylene copolymer, maleic anhydride grafted ethylene propylene diene monomer, maleic anhydride grafted linear low density polyethylene, maleic anhydride grafted very low density polyethylene or maleic anhydride grafted polypropylene. The compatibalizer acts as a coupling agent in so far as it helps to increase the adhesion of the filler to the soft ethylene elastomer component. The compatibalizer has a polar portion that binds to the filler and a non-polar portion is compatible with the soft ethylene elastomer component to ensure effective adhesion between the filler and the soft ethylene elastomer component. In a preferred composition of the present invention, the compatibalizer comprises from 0.1% to 10%, preferably from 0.25% to 7% by weight of the composition.

The base resin in the masterbatch is preferably a carrier resin such as an Engage@ polyolefin plastomer, linear low density polyethylene, very low density polyethylene or ethylene propylene copolymer. Where the base resin in the masterbatch is a functionalised resin such as ethylene vinyl acetate, or a copolymer of ethylene and methylacrylic acid or acrylic acid, the functionalised resin may behave in part as a compatibalizer. The base resin in the masterbatch is typically compatible with the elastomeric ethylene polymer of the composition.

Preferably the melt viscosity of the compatibalizer and the base resin that is used in the masterbatch should be similar or somewhat lower than the melt viscosity of the soft ethylene elastomer component to ensure good dispersion.

An example of a mica masterbatch suitable for use in the composition of the present invention would comprise 12% maleic anhydride functionalized resin as a coupling agent (compatibalizer), 30% mica, and a suitable polyethylene carrier resin.

The composition of the present invention and the masterbatch may also comprise additional additives without deviating from the invention as claimed. These additives may include EAOs that have not been rheology modified, process oils, plasticizers, specialty additives and pigments. The specialty additives include flame retardants; antioxidants; surface tension modifiers; anti- block agents; lubricants; antimicrobial agents such as organometallics, isothtazolones, organosulfurs and mercaptans; antioxidants such as phenolics, secondary amines, phophites and thioesters; antistatic agents such as quaternary ammonium compounds, amines, and ethoxylated, propoxylated or glycerol compounds; hydrolytic stabilizers; lubricants such as fatty acids, fatty alcohols, esters, fatty amides, metallic stearates, paraffinic and microcrystalline waxes, silicones and orthophosphoric acid esters; mold release agents such as fine-particle or powdered solids, soaps, waxes, silicones, polyglycols and complex esters such as trimethylol propane tristearate or pentaerythritol tetrastearate; pigments, dyes and colorants; plasticizers such as esters of dibasic acids (or their anhydrides) with monohydric alcohols such as o-phthalates, adipates and benzoates; heat stabilizers such as organotin mercaptides, an octyl ester of thioglycolic acid and a barium or cadmium carboxylate; ultraviolet light stabilizers such as a hindered amine, an o-hydroxy-phenylbenzotriazole, a 2- hydroxy,4-alkoxyenzophenone, a salicylate, a cynoacrylate, a nickel chelate and a benzylidene malonate and oxalanilide; and zeolites, molecular sieves and other known deodorizers. A preferred hindered phenolic antioxidant is Irganox^{™} 1076 antioxidant, available from Ciba-Geigy Corp.

Additional fillers may also be useful in conjunction with the composition of the present invention. Such fillers may include carbon black, glass, metal carbonates such as calcium carbonate, metal sulfates such as calcium sulfate, talc, clay or graphite fibers. These fillers may impart further scratch and mar resistance properties to the composition.

The additional additives, if used, are typically present in an amount of less than 45 %, based on the total composition weight. The amount is advantageously from 0.001 to 20 %, preferably from 0.01 to 15 % and more preferably from 0.1 to 10%.

Most preferably a silicone additive is added to the composition to provide enhanced scratch and mar resistant properties. Silicone is added in an amount of 0.10 to 2.50%, preferably 0.20 to 1.00%, most preferably 0.25 to 0.6%. The amount of silicone additive that is added to the composition will be less than the amount of filler in the composition.

The amount of silicone to be added to the composition will depend in part on the fluid viscosity of the silicone to be added. The fluid viscosity is a standard viscosity measured at 25°C. Preferably higher molecular weight silicones, such as polydimethylsiloxane, may be added with a fluid viscosity of at least 1,000 mm²/s (CSt), preferably at least 10,000 mm²/s (CSt). The silicone may be added as a masterbatch or injected as a pure liquid. If in masterbatch form the silicone will typically comprise between 10% and 50% of the masterbatch depending on the fluid viscosity of the silicone.

The silicone may be added to the feed throat of the extruder. However, the silicone, which acts as a lubricant in the composition, is preferably added downstream in the extruder to the molten soft ethylene elastomer component.

Where filler is added as a masterbatch, both the masterbatch and the soft ethylene elastomer component may be added to the feed throat of the extruder at the same time. The soft ethylene elastomer component may also be added in its individual components along with the masterbatch. Alternatively, the masterbatch may be added directly to the molten soft ethylene elastomer component after it has melted.

Where filler is added to the soft ethylene elastomer component in its pure form the filler is preferably added after or at least at the same time as the compatibalizer has already been added to the soft ethylene elastomer component although other sequences are possible.

Addition to the feed throat will require that the feed throat be kept at a temperature cold enough to prevent bridging of components in the feed throat. Subsequent processing of the composition occurs by mixing at a temperature of from 180 to 220°C, preferably from 190 to 210°C.

At the end of the extrusion process, the molten polymer extrudate must be cooled to a low temperature before being solidified so that it can be cut into pellets. If the molten polymer extrudate is cut underwater, the water temperature should be maintained at or below about 30 °C, preferably at or below 15 °C.

It will be apparent to those skilled in the art that many types of mixing equipment may be used to make the composition of the present invention including a Farrel Continuous Mixer, single screw or twin screw extruder and buss kneader.

The compositions of the present invention may be formed into articles of manufacture such as parts, sheets, or other forms using any one of a number of conventional procedures for processing elastomer compositions. The compositions can also be drawn into films, multi-layer laminates or extruded sheets, compounded with one or more organic or inorganic substances, injection-molded into articles such as knobs, handles for appliances or consumer goods, used for profile-extruded articles, or used for coated fabrics or other film and sheet applications. The compositions may be useful in the manufacture of automobile interior parts, automobile exterior parts, consumer goods with soft touch grips and consumer appliances with soft touch surfaces. Other applications may also be possible and are within the knowledge of the person skilled in the art.

The compositions of the present invention have surprisingly improved scratch and mar resistant properties relative to other soft ethylene elastomer compositions. The compositions are also useful in the manufacture of articles with low gloss.

The following examples illustrate, but do not limit the present invention.

### Example 1:

All compositions used were made on a twin-screw extruder (38:1 L/D or 50:1 L/D) at a processing temperature of between 190 and 210°C. The throughput was about 63.04 kg/hr (150 lbs/hr) at a screw speed of 3 50 RPM. The melt was pelletized using an underwater pelletizer with the cutting water kept cold at about 11-14°C. The mica masterbatch was added to the feed throat. The silicone masterbatch was added part way down the extruder as a side-feed into the molten polymer.

The compositions were formed into embossed sheets using conventional processing means. The embossed sheets had a deep hair cell grain and were pigmented black. The embossed side of each of the sheets was tested for the following properties, which are set out in Table 2:
(a) shore A hardness of sheet stock under constant load (1 second) was tested according to ASTM D 2240-00;
(b) % gloss at 60 deg angle using a glossmeter was tested according to ASTM D 523;
(c) degree of scratching was tested using the 5-finger scratch test described in Ford FLTM BN at 108-13, where a measurement of 5 indicates the most severe scratch line and a measurement of 1 indicates that no visible scratch lines can be detected on the sheet. Scratch and mar was tested using 1, 2, 3, 6 and 7 Newtons of force.

Of the sheets tested, the "Control" sample is the unmodified composition-called Advantech 8800 A^{™}, commercially available from DuPont. This composition comprises the following components:
(a) 74.53% by weight of a mixture of low density Engage® resins comprising as the primary component Engage® 8100 and as the secondary component Engage® 8842;
(b) 22.97% by weight of polypropylene homopolymer resin with a melt flow rate at 230°C, using a 2.1 kg weight, of 12 grams/10 minutes;
(c) 2.5 % by weight of Vul-Cup® 20P (Geo Specialty Chemicals) comprising
   20% organic peroxide/5% silica/75% polypropylene

Sample A comprised a mica masterbatch. The composition of the masterbatch was: 12% maleic anhydride functionalised resin as a coupling agent (compatibalizer), 30% mica, and Engage® 8100. The mica comprised 7 % by weight of the final composition.

Samples B, C and D comprised a mica masterbatch as well as a silicone masterbatch additive. The composition of the samples A, B, C, and D are set out below.

**Table 1: Composition of Samples**

| **Sample** | **Base Component** | **Additive** | **% wt additive in final composition** |
|---|---|---|---|
| Control | Advantech 8800 A^{™} | None | --- |
| A | Advantech 8800 A^{™} | mica masterbatch | 7 % mica |
| B | Advantech 8800 A^{™} | mica masterbatch and silicone masterbatch | 7 % mica, 0.25 % silicone |
| C | Advantech 8800 A^{™} | mica masterbatch and silicone masterbatch | 7 % mica, 0.50 % silicone |
| D | Advantech 8800 A^{™} | mica masterbatch and silicone masterbatch | 7% mica, 0.875 % silicone |

**Table 2: Comparison of properties of the embossed side of extruded sheet stock**

| **Sample** | **Scratch Test 7N** | **Scratch Test 6N** | **Scratch Test 3N** | **Scratch Test 2N** | **Scratch Test 1N** | **Gloss 60°** | **Shore A Value** |
|---|---|---|---|---|---|---|---|
| Control | 3 | 3 | 2 | 1 | 1 | 1.2 | 90.5 |
| A | 1 | 1 | 1 | 1 | 1 | 0.8 | 92.5 |
| B | 2 | 1 | 1 | 1 | 1 | 0.9-1.2 | 92.6-93.2 |
| C | 1 | 1 | 1 | 1 | 1 | 0.9-1.1 | 93.0-93.7 |
| D | 1 | 1 | 1 | 1 | 1 | 1.0 | 93.5 |

Sample A, had the best combined scratch and mar resistance and gloss properties. The softness of the composition was not significantly decreased with the addition of the mica masterbatch in the composition. The addition of silicone also resulted in a composition with improved scratch-and-mar resistance, while maintaining the softness of the composition. Each of the compositions tested, produced a sheet with low gloss.

### Example 2:

A sheet comprising Advantech 8800 A^{™} base resin, 7 % mica and 0.50 % silicone (sample C) was thermoformed into an article, by preheating and forming the sheet into a shape. The embossed side of the sheet was tested against the thermoformed article for scratch and mar resistance using the 5-finger scratch test as described in Ford FLTM BN at 108-13. The % gloss of the embossed side of the sheet was also tested against the thermoformed article at a 60 degree angle using a glossmeter, tested according to ASTM D 523.

Thermoforming was performed using a Sencorp thermoform machine by placing the sheet between a top and bottom platen. The temperature of the top platen was 507 °F and the temperature of the bottom platen was 580°F. The sheet was pre-heated for 80-120 seconds and then thermoformed for 18 seconds.

**Table 3: Comparison of Properties of Thermoformed and Non-Thermoformed Sheet**

| **Sample** | **Scratch Test 10N** | **Scratch Test 7N** | **Scratch Test 5N** | **Gloss 60°** |
|---|---|---|---|---|
| Control | 4 | 3 | 2 | 1.2 |
| Sample C | 2-3 | 1 | 1 | 0.7-0.8 |
| Control Thermoformed | 4 | 3 | 2 | 1.6 |
| Sample C Thermoformed | 1-2 | 1 | 1 | 1.3-1.4 |

The thermoformed sheet had the same scratch and mar resistance as the non-thermoformed sheet, when tested under a force of 5 and 7 Newtons, and superior scratch and mar resistance properties to the control sheets. At 10 Newtons the thermoformed sheet showed improved scratch and mar resistance over the non-thermoformed sheet and superior results to the control sheets. The gloss of the thermoformed sheet increased slightly when compared with the gloss of the non-thermoformed sheet, but was less than the gloss of the thermoformed control sheet, which did not comprise mica and silicone.

### Example 3

Low viscosity injection molded compositions were prepared on a twin-screw extruder (50:1 L/D) at a temperature of between 190 and 210 °C. The throughput was about 150 lbs/hour at a screw speed of 350 rpm. The melt was pelletized using an underwater pelletizer having a water temperature of about 10-14 °C. Mica masterbatch was added to the composition by addition at the feed throat. Silicone masterbatch was also added to the composition by addition part way down the extruder as a side-feed into the molten polymer.

The compositions were injection molded into air-bag doors at a melt temperature of 198-216 °C using a screw speed of 50 rpm and a mold temperature of about 27 °C.

The air bag doors were tested for scratch and mar resistance using the 5 -finger scratch test described in Ford FLTM BN 108-13, where a rating of 5 indicates the most severe scratch line and a measurement of 1 indicates that no visible scratch lines can be observed. Scratch and mar was tested using a 7 Newton force.

The "control" composition was comprised of the following components:
a) 74.25 % by weight of Engage^{®} resin 8130;
b) 24 % by weight of polypropylene homopolymer (nucleated and comprising antistatic properties) having a melt flow rate of 12 grams/10 minute at 230 °C, using a 2.1 kg weight; and,
c) 1.75 % by weight of Vul-Cup® 20P (Geo Speciality Chemicals) masterbatch comprising 20 % organic peroxide/5% silica/75% polypropylene.

Sample A comprised the "control" composition and 6.8 % weight mica and 0.5 % weight silicone in the final composition. The composition of the mica masterbatch used in Sample A comprised 12 % weight maleic anhydride functionalized resin as a coupling agent (compatibilizer), 30 % weight mica, and Engage® 8100.

**Table 4: Comparison of the scratch and mar properties of the airbag doors**

| | **Scratch Test 7N** (Control) | **Scratch Test 7N (Sample A)** |
|---|---|---|
| Smooth Side | 4 | 2 |
| Grain Side | 3 | 2 |

The addition of mica and silicone resulted in a significant improvement of the scratch and mar properties compared to the "control" sample.

Various embodiments of the present invention having been thus described in detail by way of example, variations and modifications will be apparent to those skilled in the art. The invention includes all such variations and modifications as fall within the scope of the appended claims.

## Claims

1. A composition comprising:
a soft ethylene elastomer,
which is a rheology-modified ethylene elastomer composition comprising from 50 to 95% by weight of elastomeric ethylene polymers or EAO polymer blend and from 5 to 50% by weight of a high melting polymer, based on the total ethylene elastomer composition,
a filler, a silicone, and optionally a compatibilizer to impart scratch and mar resistance properties to the composition, wherein
the filler is activated alumina or a platy filler selected from mica, talc and clay,
the compatibilizer is a functionalised polyolefin;
the filler comprises from 1 % to 20%, by weight of the total composition;
the silicone comprises from 0.10 to 2.50%, of the total composition and has a fluid viscosity of at least 1,000 mm²/s (CSt) 25°C.

2. The composition of claim 1, wherein the silicone has a fluid viscosity of at least 10,000 mm²/s (CSt) 25°C.

3. The composition of any one of claims 1 or 2, wherein
the silicone is polydimethylsiloxane,
the composition comprises from 0.1% to 10%, by weight of the composition of the compatibilizer, which is preferably maleic anhydride grafted polyolefin plastomer, maleic anhydride grafted ethylene propylene copolymer, maleic anhydride grafted ethylene propylene diene monomer, maleic anhydride grafted linear low density polyethylene, maleic anhydride grafted very low density polyethylene or maleic anhydride grafted polypropylene; and
the soft ethylene elastomer is a rheology-modified, low gel thermoplastic elastomer composition comprising at least one elastomeric ethylene α-olefin polymer or ethylene α-olefin polymer blend and at least one high melting polymer including polypropylene homopolymers and propylene/ethylene copolymers; and
the rheology-modifier preferably includes α, α'-bis(t-butyl peroxy)-diisopropylbenzene, dicymyl peroxide, 2,5-dimethyl-2,5-di-(t-butyl peroxy)hexane, di-t-butyl peroxide, 2,5-di(t-amyl peroxy)-2,5-dimethylhexane, 2,5-di-(t-butyl peroxy)-2,5-diphenylhexane, bis(alpha-methyl benzyl)peroxide, benzoyl peroxide, t-butyl perbenzoate and bis(t-butyl peroxy)-diisopropylbenzene.

4. The composition of any one of claims 1 to 3, wherein the rheology-modifier further comprises at least one co-agent with the peroxide.

5. The composition of claim 4 further comprising at least one additive including ethylene α-olefins that have not been rheology modified, process oils, plasticizers, specialty additives and pigments,
wherein the speciality additives comprise flame retardants, antioxidants, surface tension modifiers, anti-block agents, lubricants, antimicrobial agents, organometallic antimicrobial agents, isothiazolone antimicrobial agents, organosulfur antimicrobial agents, mercaptane antimicrobial agents; antioxidants, phenolic antioxidants, secondary amine antioxidants, phosphite antioxidants, thioester antioxidants, antistatic agents, quaternary ammonium compound antistatic agents, amine antistatic agents, ethoxylated, propoxylated and glycerol antistatic agents, hydrolytic stabilizers, lubricants, fatty acids, fatty alcohols, fatty esters, fatty amides, metallic stearates, paraffinic waxes, microcrystalline waxes, orthophosphoric acid esters, mold release agents, fine-particle mold release agents, powdered solids mold release agents, polyglycols, trimethylol propane tristearate, pentaerythritol tetrastearate, esters of dibasic acids (or their anhydrides) with monohydric alcohols, o-phthalates, adipates, benzoates, organotin mercaptides, octyl ester of thioglycolic acid, barium or cadmium carboxylates, ultraviolet light stabilizers, hindered amines, o-hydroxyphenylbenzotriazole, 2-hydroxy-4-alkoxybenzophenone, salicylates, cyanoacrylate, nickel chelates, benzylidene malonate, benzylidene oxalanilide, zeolites, molecular sieves and deodorizers.

6. A process for preparing the composition of any one of the preceding claims, comprising
a) combining the filler, the silicone, and optionally the compatibilizer of any one of the preceding claims to the soft ethylene elastomer of any one of the preceding claims at a mixing temperature of from 180°C to 220°C, or 190°C to 210°C, and
b) pelletizing the composition from step a) at a second temperature below the mixing temperature.

7. An article of manufacture comprising at least one component fabricated from a composition of any one of claims 1 to 5, the article of manufacture is selected from the group consisting of: automobile interior parts, automobile exterior parts, consumer goods with soft touch grips and consumer appliances with soft touch surfaces, or the article of manufacture is used in airbag door or other automotive interior applications.

## Patentansprüche

1. Zusammensetzung, umfassend
ein weiches Ethylenelastomer, das eine rheologiemodifizierte Ethylenelastomerzusammensetzung ist, die 50 bis 95 Gew.-% elastomere Ethylenpolymere oder einer EAO-Polymermischung und 5 bis 50 Gew.-% eines Polymers mit hohem Schmelzpunkt enthält, bezogen auf die Ethylenelastomer-Gesamtzusammensetzung,
einen Füllstoff, ein Silicon und wahlweise einen Verträglichkeitsverbesserer zum Beeinflussen der Kratz- und Beschädigungsfestigkeitseigenschaften der Zusammensetzung, wobei
der Füllstoff aktiviertes Aluminiumoxid oder ein plattenförmiger Füllstoff, ausgewählt aus Glimmer, Talkum und Ton, ist;
der Verträglichkeitsverbesserer ein funktionalisiertes Polyolefin ist;
der Füllstoff 1 bis 20 Gew.-% der Gesamtzusammensetzung umfasst;
das Silicon 0,10 bis 2,50 % der Gesamtzusammensetzung umfasst und eine Fluidviskosität von mindestens 1.000 mm²/s (cSt) 25°C aufweist.

2. Zusammensetzung nach Anspruch 1, wobei das Silicon eine Fluidviskosität von mindestens 10.000 mm²/s (cSt) 25°C aufweist.

3. Zusammensetzung nach einem der Ansprüche 1 oder 2, wobei
das Silicon Polydimethylsiloxan ist;
die Zusammensetzung 0,1 bis 10 Gew.-% der Zusammensetzung des Verträglichkeitsverbesserers aufweist, der vorzugsweise mit Maleinsäureanhydrid gepfropftes Polyolefinplastomer, mit Maleinsäureanhydrid gepfropftes Ethylen-Propylen-Copolymer, mit Maleinsäureanhydrid gepfropftes Ethylen-Propylen-Dien-Monomer, mit Maleinsäureanhydrid gepfropftes lineares Polyethylen mit niedriger Dichte, mit Maleinsäureanhydrid gepfropftes Polyethylen mit sehr niedriger Dichte oder mit Maleinsäureanhydrid gepfropftes Polypropylen ist; und
das weiche Ethylenelastomer eine rheologiemodifizierte thermoplastische Elastomerzusammensetzung mit geringem Gelgehalt ist, die mindestens ein elastomeres Ethylen-α-olefinpolymer oder mindestens eine Ethylen-α-olefinpolymermischung und mindestens ein Polymer mit hohem Schmelzpunkt, einschließlich Polypropylen-Homopolymere und Propylen/Ethylen-Copolymere umfasst; und
das Rheologiemodifikationsmittel vorzugsweise α,α'-Bis(t-Butylperoxy)-diisopropylbenzol, Dicymylperoxid, 2,5-Dimethyl-2,5-di-(t-butylperoxy)hexan, Di-t-butylperoxid, 2,5-Di(t-amylperoxy)-2,5-dimethylhexan, 2,5-Di-(t-butylperoxy)-2,5-diphenylhexan, Bis(alpha-methylbenzyl)peroxid, Benzoylperoxid, t-Butylperbenzoat und Bis(t-butylperoxy)-diisopropylbenzol einschließt.

4. Zusammensetzung nach einem der Ansprüche 1 bis 3, wobei das Rheologiemodifikationsmittel ferner mindestens ein weiteres Mittel mit dem Peroxid umfasst.

5. Zusammensetzung nach Anspruch 4, ferner umfassend mindestens ein Additiv, einschließend Ethylen-α-olefine, die nicht rheologiemodifiziert wurden, Verarbeitungsöle, Weichmacher, Spezialadditive und Pigmente,
wobei die Spezialadditive Flammschutzmittel, Antioxidationsmittel, Oberflächenspannungsmodifikationsmittel, Antiblockierungsmittel, Schmiermittel, antimikrobielle Mittel, organometallische antimikrobielle Mittel, antimikrobielle Isothiazolone, antimikrobielle Organoschwefelmittel, antimikrobielle Mercaptane; Antioxidationsmittel, phenolische Antioxidationsmittel, sekundäre Aminantioxidationsmittel, Phosphitantioxidationsmittel, Thioesterantioxidationsmittel, antistatische Mittel; antistatische Mittel aus einer quartären Ammoniumverbindung, antistatische Amine, antistatische ethoxylierte, propoxylierte Mittel und Glycerin, Hydrolysestabilisatoren, Schmiermittel, Fettsäuren, Fettalkohole, Fettester, Fettamide, Metallstearate, Paraffinwachse, mikrokristalline Wachse, Orthophosphorsäureester, Formtrennmittel, feinteilchenförmige Formtrennmittel, Formtrennmittel aus pulverförmigen Feststoffen, Polyglycole, Trimethylolpropantristearat, Pentaerythritoltetrastearat, Ester von zweibasigen Säuren (oder deren Anhydride) mit einwertigen Alkoholen, o-Phthalate, Adipate, Benzoate, Organozinnmercaptide, Octylester von Thioglycolsäure, Barium- oder Cadmiumcarboxylate, Ultraviolettlichtstabilisatoren, gehinderte Amine, o-Hydroxyphenylbenzotriazol, 2-Hydroxy-4-alkoxybenzophenon, Salicylate, Cyanoacrylat, Nickelchelate, Benzylidenmalonat, Benzylidenoxalanilid, Zeolithe, Molekularsieb und Deodoranzien einschließen.

6. Verfahren zur Herstellung der Zusammensetzung nach einem der vorangehenden Ansprüche, umfassend
a) Kombinieren des Füllstoffs, des Silicons und wahlweise des Verträglichkeitsverbesserers nach einem der vorangehenden Ansprüche mit dem weichen Ethylenelastomer nach einem der vorangehenden Ansprüche bei einer Mischtemperatur von 180 bis 220 °C oder 190 bis 210 °C und
b) Pelletisieren der Zusammensetzung von Schritt a) bei einer zweiten Temperatur unter der Mischtemperatur.

7. Fertigungsgegenstand, umfassend mindestens eine Komponente, die aus einer Zusammensetzung nach einem der Ansprüche 1 bis 5 hergestellt ist, wobei der Fertigungsgegenstand ausgewählt ist aus der Gruppe, bestehend aus: Automobilinnenteilen, Automobilaußenteilen, Verbrauchergütern mit weichfühligen Griffen und Verbrauchereinrichtungen mit weichfühligen Oberflächen oder wobei der Fertigungsgegenstand in einer Airbagtür oder anderen Automobilinneneinrichtungen verwendet wird.

## Revendications

1. Composition comprenant:
un élastomère d'éthylène mou, qui est une composition d'élastomère d'éthylène modifiées en rhéologie comprenant de 50% à 95% en poids de polymères d'élastomère d'éthylène ou un mélange de polymère d'EAO et de 5% à 50% en poids de polymère à point de fusion élevé, sur la base de la composition d'élastomère d'éthylène totale,
une charge, une silicone et éventuellement un agent de compatibilité pour donner des propriétés de résistance à la rayure et à l'abrasion à la composition, dans laquelle
la charge est une alumine activée ou une charge lamellaire choisi parmi un mica, un talc et une argile;
l'agent de compatibilité est une polyoléfine fonctionnalisée;
la charge comprend de 1 % à 20% en poids de la composition totale;
la silicone comprend de 0,10 à 2,50% de la composition totale et possède une viscosité de fluide d'au moins 1.000 mm²/s (CSt) 25°C.

2. Composition suivant la revendication 1, dans laquelle la silicone possède une viscosité de fluide d'au moins 10.000 mm²/s (CSt) 25°C.

3. Composition suivant l'une quelconque des revendications 1 et 2, dans laquelle
la silicone est un polydiméthylsiloxane,
la composition comprend de 0,1 % à 10% en poids de la composition de l'agent de compatibilité, qui est de préférence un plastomère de polyoléfine greffé par l'anhydride maléique, un copolymère d'éthylène et de propylène greffé par l'anhydride maléique, un monomère d'éthylène-propylène-diène greffé par l'anhydride maléique, un polyéthylène linéaire à basse densité greffé par l'anhydride maléique, un polyéthylène à très basse densité greffé par l'anhydride maléique, ou un polypropylène greffé par l'anhydride maléique; et
l'élastomère d'éthylène mou est une composition d'élastomère thermoplastique à rhéologie modifiée, à basse teneur en gel comprenant au moins un polymère d'α-oléfine d'éthylène élastomère ou un mélange de polymères d'α-oléfine d'éthylène et au moins un polymère à point de fusion élevé incluant des homopolyméres de polypropylène et des copolymères de propylène/éthylène; et
l'agent modifiant la rhéologie inclut de préférence l'α,α'-bis(t-butylperoxy)-diisopropylbenzène, le dicymylperoxyde, le 2,5-diméthyl-2,5-di-(t-butylperoxy)hexane, le di-t-butylperoxyde, le 2,5-di(t-amylperoxy)-2,5-diméthylhexane, le 2,5-di-(t-butylperoxy)-2,5-diphénylhexane, le bis(alpha-méthyolbenzyl)peroxyde, le benzoylperoxyde, le t-butylperbenzoate et le bis(t-butylperoxy)-diisopropylbenzène.

4. Composition suivant l'une quelconque des revendications 1 et 3, dans laquelle l'agent modifiant la rhéologie comprend en outre au moins un co-agent avec le peroxyde.

5. Composition suivant la revendication 4, comprenant en outre au moins un additif incluant des α-oléfines d'éthylène qui n'ont pas été modifiées en rhéologie, des huiles de procédé, des plastifiants, des additifs de spécialité et des pigments,
où les additifs de spécialité comprennent des agents ignifuges, des antioxydants, des agents modifiant la tension de surface, des agents anti-bloc, des lubrifiants, des agents antimicrobiens, des agents antimicrobiens organométalliques, des agents antimicrobiens d'isothiazolone, des agents antimicrobiens d'organosoufre, des agents antimicrobiens de mercaptane; des antioxydants, des antioxydants phénoliques, des antioxydants d'amine secondaires, des antioxydants de phosphite, des antioxydants de thioester, des agents antistatiques, des agents antistatiques de composé d'ammonium quaternaire, des agents antistatiques d'amine, des agents antistatiques éthoxylés, propoxylés et de glycérol, des stabilisants hydrolytiques, des lubrifiants, des acides gras, des alcools gras, des esters gras, des amides gras, des stéarates métalliques, des cires paraffiniques, des cires microcristallines, des esters d'acide orthophosphorique, des agents de démoulage, des agents de démoulage à fines particules, des agents de démoulage solides en poudre, des polyglycols, le tristéarate de triméthylolpropane, le tétrastéarate de pentaérythritol, des esters d'acides dibasiques (ou leurs anhydrides) avec des alcools monohydriques, des o-phtalates, des adipates, des benzoates, des mercaptides d'organoétain, l'octylester d'acide thioglycolique, des carboxylates de baryum ou de cadmium, des stabilisants de lumière ultraviolette, des amines à encombrement stérique, l'o-hydroxyphénylbenzotriazole, la 2-hydroxy-4-alkoxybenzophénone, des salicylates, le cyanoacrylate, des chélates de nickel, le malonate de benzylidène, l'oxalanilide de benzylidène, des zéolites, des tamis moléculaires et des désodorisants.

6. Procédé pour la préparation de la composition suivant l'une quelconque des revendications précédentes, comprenant:
a) la combinaison de la charge, de la silicone et éventuellement de l'agent de compatibilité suivant l'une quelconque des revendications précédentes avec l'élastomère d'éthylène mou suivant l'une quelconque des revendications précédentes à une température de mélange de 180°C à 220°C, ou de 190°C à 210°C; et
b) le pastillage de la composition provenant de l'étape a) à une deuxième température en dessous de la température de mélange.

7. Article de fabrication comprenant au moins un composant fabriqué à partir d'une composition suivant l'une quelconque des revendications 1 à 5, l'article de fabrication est choisi dans le groupe constitué de: pièces intérieures d'automobiles, pièces extérieures d'automobiles, biens de consommation avec des poignées au toucher doux et appareils de consommation avec des surfaces au toucher doux, ou l'article de fabrication est utilisé dans une porte à airbag ou d'autres applications d'intérieur d'automobiles.
